# FASCICULE DE BREVET EUROPEEN

(11) **EP 1 234 713 B1**
(45) Date de publication et mention de la délivrance du brevet: **13.12.2006**
(21) Numéro de dépôt: 02290365.2
(22) Date de dépôt: 14.02.2002
(51) Int. Cl.: B60N 3/04

(54) **Agencement d'habillage de plancher d'habitacle d'un véhicule automobile**
Anordnung zur Bekleidung des Fahrgastraumbodens eines Kraftfahrzeuges
Arrangement for covering the passenger compartment floor of an automotive vehicle

(30) Priorité: 22.02.2001 FR 0102424
(43) Date de publication de la demande: 28.08.2002
(73) Titulaire: Renault s.a.s., 92100 Boulogne Billancourt (FR)
(72) Inventeur: Charpentier, Louis, 78370 Plaisir (FR); Giraud, Alain, 92160 Antony (FR); Vilatte, Valérie, 78280 Guyancourt (FR)

(56) Documents cités:
- DE-A- 4 000 877
- DE-A- 4 343 970
- DE-U- 8 902 847
- US-A- 3 401 975
- US-A- 5 439 725
- US-A- 5 573 294

## Description

La présente invention se rapporte à un véhicule automobile comportant un plancher d'habitacle et un agencement d'habillage de plancher d'habitacle comportant au moins une couche de moquette et des éléments de maintien de ladite couche de moquette contre le plancher, le véhicule ayant les caractéristiques énumérées dans le préambule de la revendication 1.

On connaît par le brevet US-A-5 573 294 un tel agencement comportant un plancher avec deux éléments étanches insonorisants longitudinaux s'étendant chacun longitudinalement de l'avant vers l'arrière du plancher de l'habitacle et transversalement entre un tunnel central et un bas volet. Le tunnel central et les bas volets sont chacun recouverts par un tapis insonorisant. Des tapis réversibles sont fixés par des éléments de maintien sur les éléments étanches insonorisants longitudinaux au niveau où les passagers posent leurs pieds.

Un tel agencement est difficile à placer dans le véhicule à cause de l'encombrement de chaque tapis insonorisant.

L'un des buts de l'invention est de proposer un véhicule avec un agencement d'habillage réduisant la surface totale de tapis à poser, les dimensions de chaque tapis à poser ainsi que le nombre de tapis.

Un autre but de l'invention est de proposer un véhicule avec un agencement réduisant la surface de chute de tapis et le nombre de découpes internes dans les tapis.

Un autre but de l'invention est de proposer un véhicule avec un agencement facile et rapide à mettre en oeuvre dans le véhicule.

Un autre but de l'invention est de proposer un véhicule avec un agencement facile à nettoyer par l'utilisateur du véhicule.

Un autre but de l'invention est d'améliorer l'insonorisation du plancher de l'habitacle au niveau des sièges.

Le document DE-U-8902847 concerne des tapis à découper pour l'adaptation à un véhicule. Classiquement, ces tapis sont des accessoires amovibles.

Le document D-A-E4000877 concerte des tapis pour retenir de l'eau stockée dans les chaussures, par exemple après avoir marché dans la neige. Classiquement, ces tapis sont des accessoires amovibles.

Le document US-A-3401975 concerne aussi des tapis amovibles.

Le document US-A-5439725 concerne des tapis adaptés à résoudre des problèmes de passage de câble.

L'invention propose un véhicule selon la revendication 1.

Avantageusement : l'agencement d'habillage de plancher d'habitacle d'un véhicule automobile comporte une couche insonorisante côté plancher, une couche de moquette côté habitacle et des éléments de maintien d'au moins ladite couche de moquette contre le plancher; la couche de moquette comporte au moins une pièce avant qui s'étend longitudinalement à partir d'une limite avant située au niveau de l'extrémité avant du plancher jusqu'à une limite arrière située au niveau de la base avant d'au moins un habillage de support de siège avant présentant au moins un des éléments de maintien de ladite couche de moquette et qui s'étend transversalement entre la base de deux éléments d'habillage latéraux présentant chacun au moins un autre des éléments de maintien de ladite couche de moquette

Selon des caractéristiques avantageuses de l'invention suivant la revendication 1, les deux éléments d'habillage latéraux sont des habillages de bas volet du véhicule, selon un mode de réalisation de l'invention, la limite arrière de la pièce de moquette avant est située au niveau de la base avant de chaque habillage de support de deux sièges avant, les habillages de support des deux sièges avant étant jointifs, ou la limite arrière de la pièce de moquette avant est située au niveau de la base avant de chaque habillage de support de deux sièges avant et au niveau de la base avant d'au moins un élément d'habillage central placé entre les supports de chacun des deux sièges avant et muni d'au moins un des éléments de maintien de ladite couche de moquette

Selon une alternative avantageuse de l'invention, les deux éléments d'habillage latéraux sont d'une part un habillage de bas volet du véhicule et d'autre part un habillage de console centrale, la pièce de moquette avant comportant deux pièces.

Selon un mode de réalisation avantageux, la couche de moquette comporte au moins une pièce arrière qui s'étend longitudinalement à partir d'une limite avant située au niveau de la base de l'arrière d'au moins un habillage de support de siège avant présentant au moins un des éléments de maintien de ladite couche de moquette jusqu'à une limite arrière située au niveau de la base avant d'au moins un habillage de support de siège arrière présentant au moins un des éléments de maintien de ladite couche de moquette et qui s'étend transversalement entre la base de deux éléments d'habillage latéraux présentant chacun au moins un des éléments de maintien de ladite couche de moquette.

Selon d'autres mode de réalisation avantageux:
- les deux éléments d'habillage latéraux sont des habillages de bas volet du véhicule,
- la limite avant de la pièce de moquette arrière est située au niveau de la base arrière de chaque habillage de support de deux sièges avant, les habillages de support des deux sièges avant étant jointifs, ou la limite avant de la pièce de moquette arrière est située au niveau de la base arrière de chaque habillage de support de deux sièges avant et au niveau de la base arrière d'au moins un élément d'habillage central placé entre les supports de chacun des deux sièges avant et muni d'au moins un des éléments de maintien de ladite couche de moquette.

Les deux éléments d'habillage latéraux peuvent aussi être d'une part un habillage de bas volet du véhicule et d'autre part un habillage d'une console centrale arrière, la couche de moquette arrière comportant deux pièces.

Avantageusement, la couche insonorisante comporte plusieurs pièces.

Avantageusement, le support de siège est une rehausse.

D'autres caractéristiques et avantages de l'invention apparaîtront clairement à la lecture de la description suivante d'un mode de réalisation non limitatif de celle-ci, en liaison avec les dessins annexés sur lesquels :
- la figure 1 est une vue de côté d'un habitacle illustrant l'agencement d'habillage de plancher selon l'invention,
- la figure 2 est une vue en coupe de l'agencement d'habillage de plancher selon l'invention selon la ligne 2-2 de la figure 1.

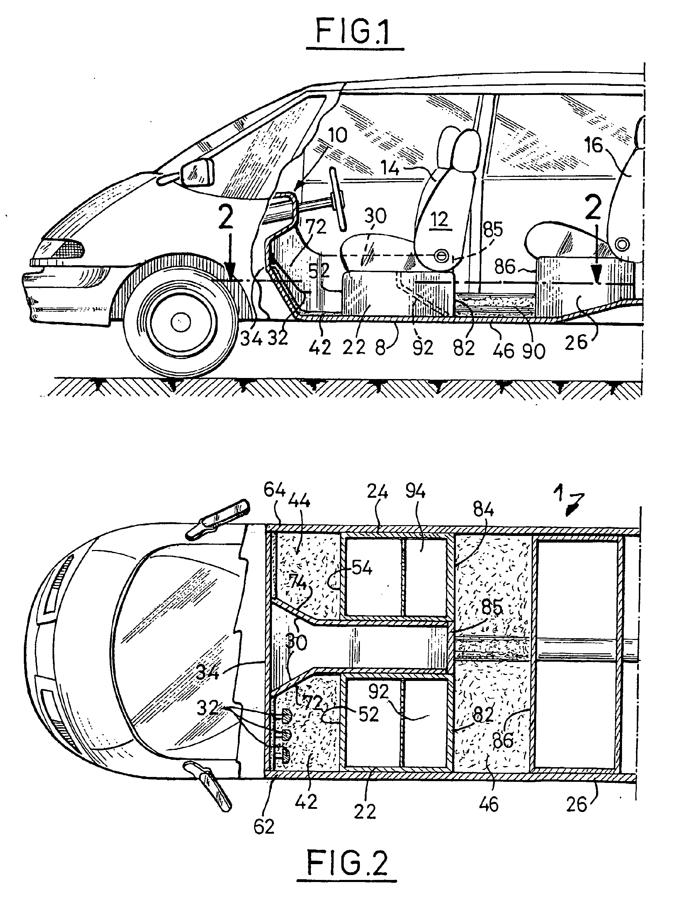

La figure 1 représente un habitacle 1 de véhicule automobile comportant un plancher 8, des sièges et un tableau de bord 10.

L'habitacle représenté comporte trois sièges, à savoir un siège avant gauche 12, un siège avant droit 14 et un siège arrière 16, chaque siège étant relié au plancher 8 par l'intermédiaire d'un support numéroté respectivement 22, 24 et 26. Chaque siège avant 12, 14 coulisse par rapport à son support 22, 24 qui est fixe par rapport au plancher 8. Chaque support avant 22, 24 comporte au moins la partie fixe des rails (non représentés) de coulissement de son siège et un habillage sur son contour.

Chaque support de siège 22, 24 et 26 peut former une rehausse de siège.

Entre les sièges avant 12 et 14 se trouve une console centrale 30 se prolongeant jusque sous le tableau de bord 10.

Un pédalier 32 est placé sous le tableau de bord 10 devant le siège avant gauche 12, à proximité de l'extrémité avant 34 du plancher 8.

L'habillage comporte une couche insonorisante monobloc (non représentée) posée directement sur le plancher et une couche de moquette.

Classiquement, la couche insonorisante recouvre tout le plancher 8.

Dans l'exemple représenté, la couche de moquette est divisée en plusieurs pièces distinctes, à savoir une pièce avant gauche 42, une pièce avant droite 44 et une pièce arrière 46.

Les pièces de moquette avant 42 et 44 s'étendent longitudinalement de l'extrémité avant 34 du plancher jusqu'aux parois avant 52 et 54 respectives des sièges avant 12 et 14. Les pièces de moquette avant gauche 42 et droite 44 s'étendent transversalement de la base d'un habillage de bas volet gauche 62 respectivement droit 64 jusqu'à la base de la paroi gauche 72 respectivement droite 74 de la console centrale 30.

Les pièces de moquette avant 42 et 44 sont retenues sur le plancher par des éléments de maintien (non représentés) intégrés dans les habillages des bas volets 62 et 64, dans les habillages avant des supports 22 et 24 et dans les habillages de la console centrale 30.

La pièce de moquette arrière 46 s'étend longitudinalement de la limite inférieure de chaque paroi arrière 82 et 84 respectivement de chaque support 22 et 24 via la limite inférieure de la paroi arrière 85 de la console centrale 30 jusqu'à la limite inférieure de la paroi avant 86 du support du siège arrière 26.

La pièce de moquette arrière 46 s'étend transversalement de la base de l'habillage de bas volet gauche 62 à la base de l'habillage de bas volet droit 64.

Sous la console et dans son prolongement vers l'arrière, le plancher 8 comporte un tunnel 90. Entre le niveau de la paroi arrière 85 de la console centrale 30 et le niveau de la paroi avant 86 du support 26, le tunnel 90 est recouvert par la pièce de moquette arrière 46.

La pièce de moquette arrière 46 est retenue sur le plancher 8 par des éléments de maintien (non représentés) intégrés dans les habillages arrière des supports 22 et 24, dans l'habillage arrière de la console 30, dans l'habillage avant du support 26 et dans l'habillage des bas volets 62 et 64.

Avantageusement, l'agencement d'habillage selon l'invention permet de se passer de moquette sous les sièges et au niveau du tunnel central situé sous la console 30. La pièce arrière 46 ne s'étend pas sur des repose-pieds 92 et 94 ménagés respectivement dans le support 22, 24 de chaque siège avant 12, 14.

Cet agencement est favorable au nettoyage de l'habillage du plancher par l'utilisateur car il n'y a pas de zone de moquette difficile d'accès à nettoyer.

Il est également favorable à la simplicité de montage. En effet, les pièces de moquette sont faciles à placer par l'opérateur en accédant par l'avant et par l'arrière du véhicule car leur encombrement est réduit.

Cet agencement est aussi favorable à la qualité de l'insonorisation de l'habitacle car il évite les remontées de bruit par des trous ménagés dans la moquette au niveau de points tels que ceux de fixation des sièges. En effet, les bruits émanant de ces points sont étouffés par les habillages des supports de siège.

En variante non représentée, l'agencement d'habillage comporte une unique pièce de moquette avant. L'habitacle peut ne pas comporter de console centrale descendant sous le tableau de bord jusqu'au plancher.

Dans ce cas, la pièce avant de moquette s'étend transversalement entre les deux habillages de bas volet. La pièce avant de moquette a pour limite arrière le niveau de la base de l'habillage des supports de sièges avant et l'extrémité inférieure avant d'une pièce d'habillage centrale du tunnel placée entre les supports de sièges avant. La pièce avant de moquette peut aussi avoir pour limite arrière le niveau de la base de deux supports de sièges jointifs ou celui d'un unique support commun aux deux sièges.

En variante non représentée, l'agencement comporte deux pièces de moquette arrière et la console centrale se prolonge jusqu'au siège arrière.

En variante, la couche insonorisante n'est pas monobloc et comporte plusieurs pièces, par exemple de mêmes dimensions que les pièces de moquette et collées à celles-ci.

L'agencement d'habillage de plancher décrit précédemment se rapporte à un véhicule comportant un siège arrière mais il est aisément concevable qu'il puisse se rapporter à un véhicule non muni d'un siège arrière.

## Revendications

1. Véhicule automobile comportant un plancher d'habitacle et un agencement d'habillage de plancher, l'agencement comportant une couche insonorisante côté plancher, une couche de moquette côté habitacle et des éléments de maintien d'au moins ladite couche de moquette contre le plancher, le véhicule comportant des sièges (12, 14, 16) reliés au plancher (8) par l'intermédiaire d'un support (22, 24, 26) fixe par rapport au plancher, **caractérisé en ce que** :
- chaque support de siège (12, 14, 16) est recouvert d'un habillage qui est au moins un des éléments de maintien de ladite couche de moquette.
- la couche de moquette (42, 44, 46) comporte au moins une pièce avant (42, 44) qui s'étend longitudinalement à partir d'une limite avant (34) située au niveau de l'extrémité avant du plancher jusqu'à une limite arrière,
- la limite arrière de la pièce de moquette avant est située au niveau de la base avant d'au moins un des habillages (52, 54) de support (22, 24) de siège avant (12, 14), la limite arrière étant maintenue par ledit au moins un des deux habillages (52, 54),
- la pièce avant (42, 44) s'étend transversalement entre la base de deux éléments d'habillage latéraux (62, 64 ; 62, 72, 64, 74) présentant chacun au moins un autre des éléments de maintien de ladite couche de moquette
- les éléments d'habillage latéraux retenant la pièce avant (62, 64 ; 62, 72, 64, 74) sont soit un habillage de l'un des bas volet (62, 64) du véhicule et un élément d'habillage central de console (30), soit des habillages (62, 64) des deux bas volet du véhicule.

2. Véhicule selon la revendication 1, **caractérisé en ce que** les éléments d'habillage latéraux retenant la pièce avant étant des habillages (62, 64) des deux bas volet du véhicule, les habillages de support des deux sièges avant (12, 14) sont jointifs.

3. Véhicule selon l'une quelconque des revendications précédentes, **caractérisé en ce que** la couche de moquette (42, 44, 46) comporte au moins une pièce arrière (46) qui s'étend longitudinalement à partir d'une limite avant située au niveau de la base de l'arrière d'au moins un habillage (82, 84, 85) de support (22, 24) de siège avant (12, 14) présentant au moins un des éléments de maintien de ladite couche de moquette jusqu'à une limite arrière située au niveau de la base avant d'au moins un habillage (86) de support (26) de siège arrière (16) présentant au moins un des éléments de maintien de ladite couche de moquette et qui s'étend transversalement entre la base de deux éléments d'habillage latéraux présentant chacun au moins un des éléments de maintien de ladite couche de moquette.

4. Véhicule selon la revendication 3, **caractérisé en ce que** les deux éléments d'habillage latéraux sont des habillages (62, 64) de bas volet du véhicule.

5. Véhicule selon la revendication 4, **caractérisé en ce que** la limite avant de la pièce de moquette arrière est située au niveau de la base arrière (82, 84) de chaque habillage de support de deux sièges avant (12, 14), les habillages de support des deux sièges avant étant jointifs.

6. Véhicule selon la revendication 4, **caractérisé en ce que** la limite avant de la pièce de moquette arrière est située au niveau de la base arrière de chaque habillage (82, 84) de support de deux sièges avant (12, 14) et au niveau de la base arrière d'au moins un élément d'habillage central (85) placé entre les supports (22, 24) de chacun des deux sièges avant (12, 14) et muni d'au moins un des éléments de maintien de ladite couche de moquette.

7. Véhicule selon la revendication 3, **caractérisé en ce que** les deux éléments d'habillage latéraux sont d'une part un habillage (62, 64) de bas volet du véhicule et d'autre part un habillage d'une console centrale arrière, la couche de moquette arrière comportant deux pièces.

8. Véhicule selon l'une quelconque des revendications précédentes, **caractérisé en ce que** la couche insonorisante comporte plusieurs pièces.

9. Véhicule selon l'une quelconque des revendications précédentes, **caractérisé en ce que** le support de siège est une rehausse.

## Claims

1. Motor vehicle comprising a passenger compartment floor and a floor trim arrangement, the arrangement comprising a sound-deadening layer facing the floor, a carpet layer facing the passenger compartment and elements for holding at least said carpet layer against the floor, the vehicle comprising seats (12, 14, 16) connected to the floor (8) by means of a support (22, 24, 26) fixed relative to the floor, **characterized in that**:
- each seat support (12, 14, 16) is covered with a trim constituting at least one of the holding elements for said carpet layer,
- the carpet layer (42, 44, 46) comprises at least one front piece (42, 44) which extends longitudinally from a front margin (34) situated at the level of the front end of the floor as far as a rear margin,
- the rear margin of the front carpet piece is situated at the level of the front base of at least one of the trims (52, 54) of the supports (22, 24) of the front seats (12, 14), the rear margin being held in place by said at least one of the two trims (52, 54),
- the front piece (42, 44) extends transversely between the base of two lateral trim elements (62, 64; 62, 72, 64, 74), each having at least one other of the holding elements for said carpet layer,
- the lateral trim elements retaining the front piece (62, 64; 62, 72, 64, 74) are either the trim of one of the side skirts (62, 64) of the vehicle and a central trim element of the console (30) or trims (62, 64) of the two side skirts of the vehicle.

2. Vehicle according to Claim 1, **characterized in that**, the lateral trim elements retaining the front piece being trims (62, 64) of the two side skirts of the vehicle, the trims of the supports of the two front seats (12, 14) are contiguous.

3. Vehicle according to any one of the preceding claims, **characterized in that** the carpet layer (42, 44, 46) comprises at least one rear piece (46) which extends longitudinally from a front margin situated at the level of the base of the rear of at least one trim (82, 84, 85) of the supports (22, 24) of the front seats (12, 14) having at least one of the holding elements for said carpet layer as far as a rear margin situated at the level of the front base of at least one trim (86) of the support (26) of the rear seat (16) having at least one of the holding elements for said carpet layer and which extends transversely between the base of two lateral trim elements each having at least one of the holding elements for said carpet layer.

4. Vehicle according to Claim 3, **characterized in that** the two lateral trim elements are trims (62, 64) of vehicle side skirts.

5. Vehicle according to Claim 4, **characterized in that** the front margin of the rear carpet piece is situated at the level of the rear base (82, 84) of each trim of the supports of the two front seats (12, 14), the trims of the supports of the two front seats being contiguous.

6. Vehicle according to Claim 4, **characterized in that** the front margin of the rear carpet piece is situated at the level of the rear base of each trim (82, 84) of the supports of two front seats (12, 14) and at the level of the rear base of at least one central trim element (85) placed between the supports (22, 24) of each of the two front seats (12, 14) and provided with at least one of the holding elements for said carpet layer.

7. Vehicle according to Claim 3, **characterized in that** the two lateral trim elements are, on the one hand, a side skirt trim (62, 64) of the vehicle and, on the other hand, a trim of a rear central console, the rear carpet layer comprising two pieces.

8. Vehicle according to any one of the preceding claims, **characterized in that** the sound-deadening layer comprises several pieces.

9. Vehicle according to any one of the preceding claims, **characterized in that** the seat support is a seat height adjuster.

## Patentansprüche

1. Kraftfahrzeug, umfassend einen Fahrgastraumboden und eine Anordnung zur Bekleidung des Bodens, wobei die Anordnung bodenseitig eine Schallschluckschicht, eine Moquetteschicht fahrgastraumseitig und Elemente zum Halten zumindest der Moquetteschicht am Boden umfasst, wobei das Fahrzeug Sitze (12, 14, 16) umfasst, die über einen festen Träger (22, 24, 26) im Verhältnis zum Boden mit dem Boden (8) verbunden sind, **dadurch gekennzeichnet, dass**:
- jeder Sitzträger (12, 14, 16) mit einer Bekleidung bedeckt ist, die mindestens eines der Elemente zum Halten der Moquetteschicht ist,
- die Moquetteschicht (42, 44, 46) mindestens ein Vorderteil (42, 44) umfasst, das sich längs von einer vorderen Begrenzung (34), die sich auf der Höhe des vorderen Endes des Bodens befindet, bis zu einer hinteren Begrenzung erstreckt,
- die hintere Begrenzung des vorderen Moquetteteils sich auf der Höhe der vorderen Sohle von mindestens einer der Bekleidungen (52, 54) der Träger (22, 24) der vorderen Sitze (12, 14) befindet, wobei die hintere Begrenzung durch mindestens eine der beiden Bekleidungen (52, 54) gehalten wird,
- das vordere Teil (42, 44) sich quer zwischen der Sohle der beiden seitlichen Bekleidungselemente (62, 64; 62, 72, 64, 74) erstreckt, die jeweils mindestens ein anderes der Elemente zum Halten der Moquetteschicht aufweisen,
- die seitlichen Bekleidungselemente, die das vordere Teil (62, 64; 62, 72, 64, 74) festhalten, entweder eine Bekleidung einer der Seitenschweller (62, 64) des Fahrzeugs und ein mittleres Bekleidungselement der Konsole (30) oder Bekleidungen (62, 64) der beiden Seitenschweller des Fahrzeugs sind.

2. Fahrzeug nach Anspruch 1, **dadurch gekennzeichnet, dass**, da die seitlichen Bekleidungselemente, die das vordere Teil festhalten, Bekleidungen (62, 64) der beiden Seitenschweller des Fahrzeugs sind, die Bekleidungen der Träger der beiden Vordersitze (12, 14) aneinander stoßend sind.

3. Fahrzeug nach einem der vorhergehenden Ansprüche, **dadurch gekennzeichnet, dass** die Moquetteschicht (42, 44, 46) mindestens ein hinteres Teil (46) umfasst, das sich längs erstreckt ab einer vorderen Begrenzung, die sich auf der Höhe der hinteren Sohle mindestens einer Bekleidung (82, 84, 85) der Träger (22, 24) der Vordersitze (12, 14) befindet, die mindestens eines der Elemente zum Halten der Moquetteschicht bis zu einer hinteren Begrenzung aufweist, die sich auf der Höhe der vorderen Sohle mindestens einer Bekleidung (86) der Träger (26) der Rücksitze (16) befindet, der mindestens eines der Elemente zum Halten der Moquetteschicht aufweist und das sich quer zwischen der Sohle der beiden seitlichen Bekleidungselemente erstreckt, die jeweils mindestens eines der Elemente zum Halten der Moquetteschicht aufweisen.

4. Fahrzeug nach Anspruch 3, **dadurch gekennzeichnet, dass** die beiden seitlichen Bekleidungselemente Bekleidungen (62, 64) der Seitenschweller des Fahrzeugs sind.

5. Fahrzeug nach Anspruch 4, **dadurch gekennzeichnet, dass** die vordere Begrenzung des hinteren Moquetteteils sich auf der Höhe der hinteren Sohle (82, 84) jeder Bekleidung der Träger der beiden Vordersitze (12, 14) befindet, wobei die Bekleidungen der Träger der beiden Vordersitze aneinander stoßend sind.

6. Fahrzeug nach Anspruch 4, **dadurch gekennzeichnet, dass** die vordere Begrenzung des hinteren Moquetteteils sich auf der Höhe der hinteren Sohle jeder Bekleidung (82, 84) der Träger der beiden Vordersitze (12, 14) und auf der Höhe der hinteren Sohle von mindestens einem mittleren Bekleidungselement (85) befindet, das zwischen den Trägern (22, 24) jeder der beiden Vordersitze (12, 14) eingesetzt ist und das mit mindestens einem der Elemente zum Halten der Moquetteschicht versehen ist.

7. Fahrzeug nach Anspruch 3, **dadurch gekennzeichnet, dass** die beiden seitlichen Bekleidungselemente einerseits eine Bekleidung (62, 64) der Seitenschweller des Fahrzeugs und andererseits eine Bekleidung einer hinteren Mittelkonsole sind, wobei die hintere Moquetteschicht zwei Teile umfasst.

8. Fahrzeug nach einem der vorhergehenden Ansprüche, **dadurch gekennzeichnet, dass** die Schallschluckschicht mehrere Teile umfasst.

9. Fahrzeug nach einem der vorhergehenden Ansprüche, **dadurch gekennzeichnet, dass** der Sitzträger ein Aufsetzteil ist.
